# EUROPÄISCHE PATENTANMELDUNG

(11) **EP 0 732 386 A1**
(43) Veröffentlichungstag der Anmeldung: **18.09.1996**
(21) Anmeldenummer: 96103823.9
(22) Anmeldetag: 12.03.1996
(51) Int. Cl.: C09J 199/00, C08L 97/02, C08B 30/10

(54) **Klebstoff auf der Basis von Kartoffelpülpe sowie Herstellung und Verwendung des Klebstoffs**

(30) Priorität: 17.03.1995 DE 19509633
(71) Anmelder: Mayer, Frank, Prof. Dr., 37120 Bovenden (DE)
(72) Erfinder: Mayer, Frank, Prof. Dr., 37120 Bovenden (DE)
(74) Vertreter: Rehberg, Elmar, Dipl.-Ing.

(57) **Zusammenfassung**

Ein Klebstoff weist einen Feststoffanteil von mindestens 50 Gewichtsprozent modifizierter Kartoffelpülpe auf, die als Nebenprodukt der Stärkeherstellung aus Kartoffeln anfällt. Der Kartoffelpülpeanteil weist einen Zelluloseanteil von mehr als 20 Gewichtsprozent und einen Pektingehalt von mehr als 10 Gewichtsprozent auf. Die Zellulose liegt in dem Kartoffelpülpeanteil zu mehr als 90 Gewichtsprozent in Form von einzelnen Zellwandfragmenten zerstörter Stärkezellen und zerstörter Schalenzellen vor.

## Beschreibung

Die Erfindung bezieht sich auf einen Klebstoff mit einem Feststoffanteil von mindestens 50 Gewichtsprozent modifizierter Kartoffelpülpe, wobei der Kartoffelpülpeanteil einen Zellulosegehalt von mehr als 20 Gewichtsprozent und einen Pektingehalt von mehr als 10 Gewichtsprozent aufweist. Weiterhin bezieht sich die Erfindung auf die Herstellung und die Verwendung eines solchen Klebstoffs sowie auf eine Vorrichtung zur Herstellung des Klebstoffs.

Kartoffelpülpe fällt als Nebenprodukt der Stärkegewinnung aus Kartoffeln an. Sie weist einen hohen Wasseranteil und als Feststoffe Stärke, Zellulose, Hemizellulose, Pektin, Rohprotein und Asche auf. Die Stärke liegt vorwiegend im Inneren von Kartoffelstärkezellen vor. Die Zellulose und die Hemizellulose, auf die im folgenden nur noch gemeinsam als Zellulose Bezug genommen wird, sowie das Pektin liegen in Form von Zellwandbestandteilen der Stärkezellen und von Schalenzellen vor. Kartoffelpülpe hat bereits im unmodifizierten Zustand wie bei der Stärkeproduktion anfallend gewisse Klebstoffeigenschaften. Die Erfindung fällt auf das Gebiet der Maßnahmen, diese Klebstoffeigenschaften durch geeignete Behandlungen der Kartoffelpülpe zu verbessern.

Die Verwendung von unmodifizierter Kartoffelpülpe bei der Herstellung von Platten oder Formkörpern aus zellulosefaserhaltigen Ausgangsstoffen ist bereits aus der DE-PS 39 33 279 und der DE-PS 40 20 969 bekannt. In beiden Fällen wird die Kartoffelpülpe nicht als Bindemittel, sondern als Bestandteil der Ausgangsstoffe angesehen. Allerdings werden auch bei der bekannten Verwendung der Kartoffelpülpe verbesserte Bindungen der Platten und Formkörper erreicht, und der Anteil konventioneller Bindemittel in den Platten und Fomkörpern kann reduziert werden. Unter konventionellen Bindemitteln sind dabei Harnstoff-Formaldehydharze, Melamin-Formaldehydharze, Isocyanatharze und dergleichen zu verstehen.

Ein Klebstoff der eingangs beschriebenen Art, seine Herstellung und Verwendung sind aus der EP-OS 0 613 906 bekannt. Dort wird die Verwendung von modifizierter Kartoffelpülpe als Hauptbestandteil von Klebstoffen beschrieben, die zur Verwendung als Bindemittel für die Herstellung von Platten und Formkörpern aus zellulosefaserhaltigen Ausgangsstoffen vorgesehen sind. Die Modifikation der Kartoffelpülpe erfolgt dadurch, daß die Teilchen der Kartoffelpülpe auf eine mittlere Teilchengröße von weniger als 350 µm zerkleinert werden und/ oder daß die Faserstruktur der Kartoffelpülpe durch Enzyme beeinflußt wird. Durch die Zerkleinerung soll das Eindringen der Kartoffelpülpeteilchen in die zellulosefaserhaltigen Ausgangsstoffe erleichtert werden. Eine Zerkleinerung auf mittlere Teilchengrößen von weniger als 100 µm wird als sehr aufwendig beschrieben und soll nur in speziellen Fällen sinnvoll sein. Als Vorrichtungen zur Zerkleinerung der Pülpeteilchen werden unter anderem Homogenisatoren, insbesondere Hochdruckhomogenisatoren, vorgeschlagen. Bei der Enzymbehandlung der Kartoffelpülpe wird eine indirekte Zerkleinerung der Pülpeteilchen durch Zersetzung der Pektinverbindung zwischen den einzelnen Zellen und eine Zersetzung der Zellwände erreicht.

Der Erfindung liegt die Aufgabe zugrunde, einen weiter verbesserten Klebstoff auf der Basis von Kartoffelpülpe, sowie vorteilhafte Verwendungs- und Herstellungsmöglichkeiten dieses Klebstoffs aufzuzeigen.

Der Klebstoff der eingangs beschriebenen Art ist erfindungsgemäß dadurch gekennzeichnet, daß die Zellulose in dem Kartoffelpülpeanteil zu mehr als 90 Gewichtsprozent in Form von einzelnen Zellwandfragmenten zerstörter Stärkezellen und zerstörter Schalenzellen vorliegt. Typische Stärkezellen weisen einen Durchmesser von 80 bis 120 µm auf, typische Schalenzellen in der Kartoffelpülpe einen Durchmesser von 30 bis 70 µm. Beide Arten von Zellen liegen in dem Kartoffelpülpeanteil des neuen Klebstoffs fast ausschließlich in zerstörter Form vor. Dies ist durch elektronenmikroskopische Untersuchungen problemlos nachweisbar. Dabei ist es enscheidend, daß nicht nur irgendwie geöffnete Zellwände vorliegen, sondern daß es sich um deutlich kleinere Einheiten, nämlich um Zellwandfragmente, handelt. Diese feinverteilen Zellwandfragmente weisen eine extrem große reaktive Oberfläche auf, wodurch die Klebeeigenschaften des neuen Klebstoffs deutlich verbessert sind. Insbesondere wirkt sich die feine Verteilung der Zellulose, aus der die Zellwandfragmente bestehen, auf die Feuchtebeständigkeit der mit dem neuen Klebstoff bewirkten Bindungen aus. Für die Feuchtebeständigkeit spielt auch das an den äußeren Oberflächen der Zellwände vorliegende und durch die Fragmentierung der Zellwände freigesetzte Pektin eine Rolle. Dieses Pektin weist bei dem erfindungsgemäßen Vorliegen der Zellulose in Form von einzelnen Zellwandfragmenten wie die Zellulose selbst eine extrem große reaktive Oberfläche auf. Dabei ist natürlich vorausgesetzt, daß das Pektin nicht auf enzymatischem Wege abgebaut ist.

Um die volle Klebekapazität der Kartoffelpülpe zu erhalten, ist es erforderlich, daß der Kartoffelpülpeanteil des neuen Klebstoffs einen unmodifizierten Pektingehalt aufweist. Nach den vorstehenden Erläuterungen bedeutet unmodifiziert, daß kein enzymatischer Abbau stattgefunden hat. Es versteht sich, daß auch der Zellulosegehalt des Kartoffelpülpeanteils nicht durch einen enzymatischen Abbau reduziert oder modifiziert sein darf, wenn die volle Klebekapazität der Kartoffelpülpe nutzbar gemacht werden soll.

Die Vorteile des neuen Klebstoffs treten unabhängig von dem Feststoffanteil der modifizierten Kartoffelpülpe auf. Die modifizierte Kartoffelpülpe wird jedoch vorzugsweise nur mit einer geringen Menge anderer Klebstoffbestandteile vermischt, deren Feststoffanteil in aller Regel ≦ 5 Gewichtsprozent ist. Es ist auch möglich, ganz ohne weitere Zusätze auszukommen und den Klebstoff vollständig aus der modifizierten Kartoffelpülpe auszubilden.

Um eine ideale Feinverteilung der Zellulose in dem Kartoffelpülpeanteil sicherzustellen, liegt die Zellulose vorzugsweise zu mehr als 98 % in Form von Zellwandfragmenten zerstörter Stärkezellen und zerstörter Schalenzellen vor. Das heißt, daß bis auf atypische Ausnahmen alle in einer unmodifizierten Kartoffelpülpe enthaltenen Zellen und Zellwände zerstört sind. Dabei weisen die Zellwandfragmente der zerstörten Stärkezellen und der zerstörten Schalenzellen eine zahlgemittelte mittlere Teilchengröße von weniger als 10 µm, vorzugsweise von weniger als 1 µm, auf. Diese Größenordnung, die deutlich unter dem Durchmesser der kleineren Schalenzellen liegt, macht deutlich, daß es nicht auf irgendeine Zerstörung der in unmodifizierter Kartoffelpülpe enthaltenen Zellen, sondern auf eine Feinstverteilung der in der Kartoffelpülpe enthaltenen Zellulose und des mit dieser verbundenen Pektins ankommt.

Der neue Klebstoff kann die Form einer beispielsweise wäßrigen Suspension aufweisen. Handhabungsvorteile ergeben sich jedoch, wenn der Klebstoff ein feines Pulver mit einer mittleren Teilchengröße ≦ 20 µm und mit einer Restfeuchte ≦ 25 Gewichtsprozent ist. Die Teilchengröße des Pulvers kann durch Granulierungseffekte etwas größer sein als diejenige der zugrundeliegenden Zellwandfragmente der Stärkezellen und Schalenzellen. Vorzugsweise fällt die mittlere Teilchengröße des Pulvers jedoch in denselben Bereich wie diejenige der Zellwandfragmente von weniger als 10 µm. Die geringe Teilchengröße des Pulvers stellt die gewünschte Feinstverteilung des Klebstoffs über die zu verklebenden Oberflächen sicher. Insbesondere vermag das Pulver auch in enge Zwischenräume einzudringen. Das Pulver ist bis zu einer Restfeuchte von 25 Gewichtsprozent Wasser schüttfähig und leicht handhabbar. Die Bindung aufgrund des neuen Klebstoffs verlangt nach einer gewissen Feuchtigkeit im Bereich der zu verklebenden Oberflächen. Durch den hohen Restfeuchteanteil, bis zu dem das Pulver seine Schüttfähigkeit beibehält, kann diese Feuchtigkeit ohne zusätzliche Maßnahmen allein durch das den Klebstoff bildende Pulver bereitgestellt werden.

Bei Verfahren zur Herstellung des Klebstoffs wird die Kartoffelpülpe vorzugsweise einem schnellen Druckabfall unterworfen, um die Zerstörung der Stärkezellen und Schalenzellen durchzuführen. Eine Druckbehandlung hat den Vorteil, daß die Zerstörung der Zellen nicht auf irgendwelche Oberflächen der Kartoffelpülpe beschränkt ist, sondern in deren gesamten Volumen erfolgt.

Eine Zerkleinerung der in der Kartoffelpülpe vorkommenden Pülpeteilchen mit einem Hochdruckhomogenisator ist bereits aus der EP-OS 0 613 906 bekannt. Hierbei soll jedoch keine Zerkleinerung unter einen Teilchendurchmesser von 100 µm erfolgen, wodurch eine Zerstörung der Schalenzellen, deren Durchmesser 30 bis 70 µm beträgt, nicht zuverlässig erfolgt. Darüberhinaus ist bei einer verbleibenden Teilchengröße von 100 µm keine Zerstörung der Zellwände in einzelne Zellwandfragmente gegeben.

Das erfindungsgemäße Verfahren zur Herstellung des Klebstoffs ist dementsprechend dadurch gekennzeichnet, daß der auf die Kartoffelpülpe einwirkende Differenzdruck so groß ist, daß er zu einer Zerstörung der Stärkezellen und Schalenzellen in einzelne Zellwandfragmente führt. Die hierfür erforderlichen Differenzdrücke entsprechen ungefähr dem, was in der DE-OS 41 40 799 zur Behandlung von Kartoffelpülpe zwecks Herstellung eines Nahrungsmittels gefordert wird. Allerdings sind jeweils relativ hohe Differenzdrücke zu wählen, da es bei der Erfindung im Gegensatz zu dem bekannten Verfahren nicht allein darauf ankommt, die bei unbehandelter Kartoffelpülpe in den Stärkezellen vorliegende Stärke freizusetzen und als Nährstoff verwertbar zu machen.

Die erforderlichen Differenzdrücke für eine ausreichende Zerstörung der Stärkezellen und Schalenzellen in einzelne Zellwandfragmente sind vergleichsweise klein, wenn die Kartoffelpülpe vor der Differenzdruckbehandlung autoklaviert wird. Durch diese Wärmebehandlung werden die Zellwände der Stärkezellen und Schalenzellen aufgeweicht, so daß ihre Zerstörung bei der anschließenden Differenzdruckbehandlung schneller erfolgt. Das Autoklavieren der Kartoffelpülpe kann kontinuierlich als sogenanntes Jet-Boiling erfolgen.

Nach der Differenzdruckbehandlung kann die Kartoffelpülpe sprühgetrocknet werden. Hierdurch wird die Lagerfähigkeit der Kartoffelpülpe und des hieraus gebildeten Klebstoffs erhöht. Die Kartoffelpülpe zeichnet sich nach der Differenzdruckbehandlung durch eine ausgeprägte Keimarmut aus, da auch Keimzellen bei der Differenzdruckbehandlung zerstört werden. Die Keimarmut wird daneben durch das Autoklavieren der Kartoffelpülpe vor der Differenzdruckbehandlung gefördert. Die sprühgetrocknete Kartoffelpülpe ist im Gegensatz zu flüssiger Kartoffelpülpe leichter lagerfähig, weil der neuerliche Befall mit Keimen langsamer erfolgt, weil ein geringerer Raumbedarf besteht und weil darüberhinaus die Handhabung erleichtert ist. Das Sprühtrocknen der Kartoffelpülpe erfordert einen vergleichsweise geringen Energieaufwand, da die sprühgetrocknete Kartoffelpülpe auch bei einem Restfeuchtgehalt von bis zu 25 % voll schüttfähig ist, und entsprechend ein relativ hoher Wasseranteil beim Sprühtrocknen in der Kartoffelpülpe verbleiben kann.

In besonders einfacher Weise ist das erfindungsgemäße Verfahren zur Herstellung des Klebstoffs durchführbar, wenn die heiße Kartoffelpülpe bei der Differenzdruckbehandlung zum Trocknen versprüht wird. So werden die für die Differenzdruckbehandlung aufgebrachten Energien gleichzeitig zur Trocknung der Kartoffelpülpe genutzt. Darüberhinaus verdampft das in der heißen Kartoffelpülpe enthaltene Wasser nach dem Versprühen der heißen Kartoffelpülpe ohne zusätzliche Maßnahmen, so daß nur noch dafür Sorge getragen werden muß, daß die entstehenden Brüden abgeführt werden. Ein hoher zusätzlicher Energieeintrag beim Sprühtrocknen ist so vermeidbar.

Weiterhin ist das Versprühen der heißen Kartoffelpülpe bei der Differenzdruckbehandlung zum Trocknen mit äußerst geringem apparativen Aufwand durchführbar. Die erfindungsgemäße Vorrichtung zur Herstellung des Klebstoffs ist daher dadurch gekennzeichnet, daß ein aufheizbarer Hochdruckbehälter zur Aufnahme der Kartoffelpülpe vorgesehen ist, daß der Hochdruckbehälter eine Austrittsdüse für die unter Überdruck stehende, erhitzte Kartoffelpülpe aufweist, über der der auf die hindurchtretende Kartoffelpülpe einwirkende Überdruck schnell abfällt, und daß die Austrittsdüse Bestandteil einer Sprühdüse einer Sprühtrocknungseinrichtung ist. Die Sprühtrocknungseinrichtung weist zusätzlich Abführmittel für anfallende Brüden auf, mit denen in der Regel ein Luftstrom im Gegenstrom zu der versprühten Kartoffelpülpe geführt wird.

Bei der Verwendung des neuen Klebstoffs zur Herstellung von Platten oder Formkörpern aus zellulosefaserhaltigen Ausgangsstoffen ergeben sich auffällig gute Werte bei der Feuchtebeständigkeit der Bindung der Platten und Formkörper. Darüberhinaus ist ein relativ geringer Bindemittelanteil ausreichend, um qualitativ hochwertige Platten und Formkörper herzustellen. So reicht bezogen auf den Feststoffanteil die halbe Bindemittelmenge im Vergleich zu herkömmlichen Harnstoff-Formaldehydharzen aus.

Im Vergleich zu dem aus der EP-OS 0 613 906 bekannten Klebstoff auf Kartoffelpülpebasis kann die Verwendung des neuen Klebstoffs erfindungsgemäß dadurch gekennzeichnet sein, daß der Klebstoff als Bindemittel in Form eines eine Restfeuchte ≦ 25 Gewichtsprozent aufweisenden Pulvers mit den Ausgangsstoffen vermischt wird. Das Aufbringen des Bindemittels in wäßriger Suspension ist nicht erforderlich, wodurch ein Vortrocknen der Mischung aus Bindemittel und Ausgangsstoffen zur Einstellung einer geeigneten Restfeuchte für das Verpressen der Platten oder Formkörper entfällt. Dies ist aus energetischen Gründen günstig. Das den neuen Klebstoff bildende Pulver vermischt sich aufgrund seiner geringen Teilchengröße mit den Ausgangsstoffen so gleichmäßig, daß für die vollständige Benetzung der Ausgangsstoffe mit dem Bindemittel der Einsatz einer Bindemittelsuspension nicht erforderlich ist.

Die Verwendung des neuen Klebstoffs bei der Herstellung von Platten oder Formkörpern aus zellulosefaserhaltigen Ausgangsstoffen kann erfindungsgemäß auch dadurch gekennzeichnet sein, daß der Klebstoff als Suspension mit einem Feststoffanteil von 1 bis 30 Gewichtsprozent auf die Oberfläche der Platten bzw. Formkörper aufgebracht wird. Dabei dient der Klebstoff nicht als eigentliches Bindemittel für die faserhaltigen Ausgangsstoffe im Volumen der Platten und Formkörper, sondern er wird als Füllstoff für das Erreichen einer besonders dichten und glatten Oberfläche der Platten und Formkörper genutzt. Eine solche Oberfläche ist ohne zusätzliches Glatt- und/ oder Füllspachteln lackierbar. Darüberhinaus wird durch eine solche Oberfläche die Feuchtebeständigkeit der Platten und Formkörper erhöht, weil sie ein Eindringen der Feuchtigkeit in deren Volumen verhindert.

Bei der Veredelung der Oberflächen der Platten und Formkörper durch den neuen Klebstoff reicht ein Feststoffanteil des Klebstoffs an den Platten bzw. Formkörpern von weniger als 1 Gewichtsprozent aus. Vorzugsweise beträgt er sogar weniger als 0,5 Gewichtsprozent. Trotz dieser geringen Mengen wird der beschriebene Vorteil bei der Oberfläche der Platten bzw. Formkörper erreicht.

Besonders vorteilhaft ist der neue Klebstoff auch als Bindemittel für mehrschichtige Laminate aus zellulosefaserhaltigen folienartigen Ausgangsstoffen geeignet. Voraussetzung ist nur, daß die folienartigen Ausgangsstoffe eine gewisse Kapazität zum Aufsaugen von Feuchtigkeit aufweisen. Beispielsweise ist Papier für die Herstellung von Laminaten mit dem neuen Klebstoff geeignet, was Altpapier einschließt.

Der neue Klebstoff kann bei der Herstellung von Platten und Formkörpern mit den Ausgangsmaterialien heiß verpreßt werden. Es ist jedoch auch eine kalte Verpressung möglich. Diese erfordert jedoch die Anwendung deutlich höherer Preßdrücke. Außerdem ist zu beachten, daß bei einem kalten Verpressen keine Feuchtigkeit verdampft wird, und der Restfeuchte in dem räumlichen Bereich des Klebstoffs besondere Aufmerksamkeit geschenkt werden muß.

Vorzugsweise beträgt die Feuchtigkeit in dem räumlichen Bereich des Klebstoffs zu Beginn des Verpressens 10 bis 25 Gewichtsprozent. Zu dem räumlichen Bereich des Klebstoffs gehört neben dem Klebstoff selbst auch das Ausgangsmaterial, soweit es einem Feuchtigkeitshaushalt des Klebstoffs durch Wasseraufnahme oder -abgabe beteiligt ist.

Der neue Klebstoff ist selbstverständlich auch außerhalb des Bereichs der Herstellung von Platten und Formkörpern sowie Laminaten verwendbar. So kann er als Leim für Papier, Holz, Pappe und dergleichen eingesetzt werden. Das heißt, seine Verwendung schließt die Verbindung und Veredelung sämtlicher zellulosefaserhaltigen Materialien ein.

Die Erfindung wird im folgenden anhand von Ausführungsbeispielen näher erläutert und beschrieben. Dabei zeigt
- Figur 1: eine Vorrichtung zur Herstellung des Klebstoffs und
- Figur 2: eine Transmissions-elektronenmikroskopische Abbildung von Zellwandfragmenten in dem Klebstoff.

Die Vorrichtung 1 zur Herstellung des neuen Klebstoffs weist einen aufheizbaren Hochdruckbehälter 2 für Kartoffelpülpe 3 auf. Die Kartoffelpülpe wird entweder so eingesetzt, wie sie bei der Stärkeproduktion aus Kartoffeln anfällt, oder nachdem ihr Wassergehalt zuvor reduziert wurde, was aus energetischen Gesichtspunkten bei der Weiterbehandlung günstiger ist. In dem Hochdruckbehälter 2 wird die Kartoffelpülpe 3 autoklaviert. Das heißt, die Kartoffelpülpe wird für einige Sekunden bis Minuten erhöhter Temperatur unter erhöhtem Druck ausgesetzt. Hierdurch weichen die Zellwände der in der Kartoffelpülpe befindlichen Stärkezellen und Schalenzellen auf. Darüberhinaus wird die Kartoffelstärke, die in Form von Stärkekörnern in den Stärkezellen vorliegt, denaturiert. Für die Erfindung kommt es jedoch im wesentlichen auf den ersten Effekt an.

Der Hochdruckbehälter 2 weist eine Austrittsdüse 4 für die heiße Kartoffelpülpe 3 auf. Beim Hindurchtreten der Kartoffelpülpe durch die Austrittsdüse 4 wird die Kartoffelpülpe 3 einer Differenzdruckbehandlung unterworfen. Der Innendruck des Hochdruckbehälters 2 fällt über die Differenzdüse 4 vollständig und bezogen auf die hindurchtretende Kartoffelpülpe 3 schnell ab. Dabei werden die in der Kartoffelpülpe 3 enthaltenen Zellwände der Schalenzellen und Stärkezellen in einzelne Zellwandfragmente zerstört. Die Austrittsdüse 4 bildet gleichzeitig die Sprühdüse 5 einer Sprühtrocknungseinrichtung 6. Die Sprühtrocknungseinrichtung 6 dient zum Trocknen der differenzdruckbehandelten Kartoffelpülpe unter einen Restfeuchtegehalt von 25 Gewichtsprozent. Unter dieser Marke ist die getrocknete Kartoffelpülpe als Pulver voll schüttfähig. Die Sprühtrocknungseinrichtung 6 weist neben der Sprühdüse 5 im wesentlichen ein Gebläse 7 auf, das einen Luftstrom 8 im Gegenstrom zu der versprühten Kartoffelpülpe 3 führt. Ein besonderer Energieeintrag, beispielsweise in Form eines aufgeheizten Luftstroms 8, ist nicht erforderlich, da der Wassergehalt aus der versprühten Kartoffelpülpe 3 selbsttätig verdampft und nur die anfallenden Brüden durch den Luftstrom 8 entfernt werden müssen. Eine selbstständige Verdampfung des Wassergehalts der versprühten Kartoffelpülpe 3 ergibt sich insbesondere dann, wenn die Kartoffelpülpe 3 bezogen auf den Umgebungsdruck hinter der Austrittsdüse 4 bzw. Sprühdüse 5 überhitzt ist, wodurch es zu einer schlagartigen Verdampfung des Wassers kommt. Der Hochdruckbehälter 2 ist hier für eine chargenweise Behandlung von Kartoffelpülpe 3 ausgelelgt. Die Vorrichtung 1 kann jedoch dahingehend modifiziert sein, daß die Kartoffelpülpe kontinuierlich nach dem Jet-Boiling-Verfahren autoklaviert, beim Durchtreten durch die hierbei zu verwendende Düse der Druckbehandlung unterworfen und gleichzeitig zum Trocknen versprüht wird. In jedem Fall ist für die erfindungsgemäße Druckbehandlung der Kartoffelpülpe nur ein äußerst geringer apparativer Aufwand erforderlich.

### Beispiel 1:

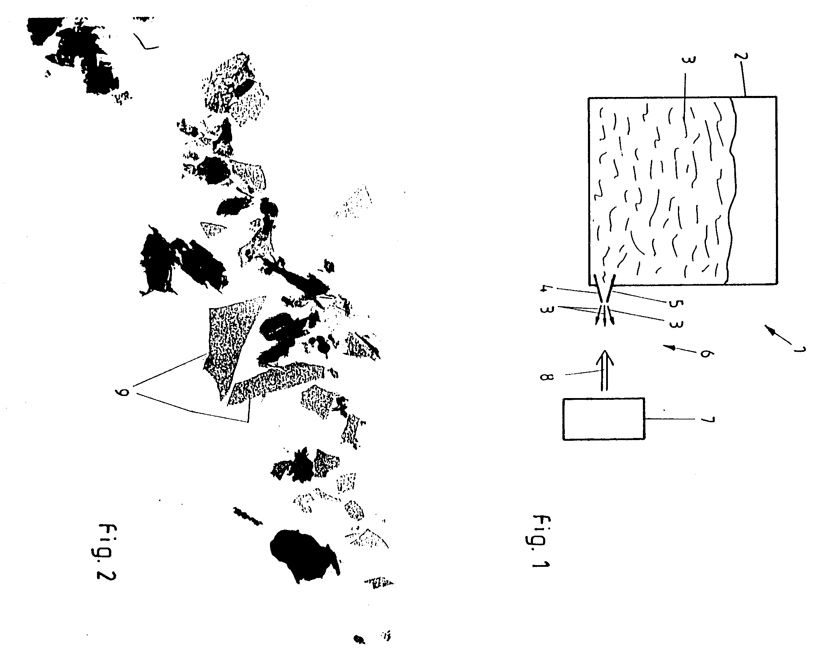

Kartoffelpülpe mit 13 Gewichtsprozenz Trockenmasse und bezogen auf die Trockenmasse 37 Gewichtsprozent Stärke, 17 Gewichtsprozent Zellulose, 14 Gewichtsprozent Hemizellulose, 17 Gewichtsprozent Pektin, 7 Gewichtsprozent Rohfaser, 4 Gewichtsprozent Rohprotein und 4 Gewichtsprozent Asche wurde in einem Autoklaven für drei Minuten bei 121 °C autoklaviert. Durch das Autoklavieren lösten sich die innerhalb und außerhalb der Stärkezellen vorliegenden Stärkekörner auf, was durch Transmissions-elektronenmikroskopische Untersuchung der autoklavierten Kartoffelpülpe nachweisbar war. Direkt im Anschluß an das Autoklavieren wurde die Kartoffelpülpe einer Differenzdruckbehandlung mit einem Differenzdruck von 55 Bar unterworfen. Hierdurch wurden die durch das Autoklavieren aufgeweichten Zellwände der Stärkezellen und Schalenzellen in feine Zellwandfragmente zerstört. Eine Transmissionselektronenmikroskopische Abbildung solcher Zellwandfragmente 9 zeigt Figur 2. Dabei ist die Vergrößerung der Abbildung 50.000-fach. Die mittlere Teilchengröße der Zellwandfragmente 9 von 113 vermessenen Zellwandfragmenten 9 betrug 260 Nanometer, also deutlich weniger als 1 µm. Die Zellwandfragmente 9 bestehen aus Zellulose und Hemizellulose, auf die im folgenden nur noch gemeinsam als Zellulose Bezug genommen wird. Die Zellulose liegt in derselben kristallinen makromolekularen Struktur vor, wie in den Zellwänden der Stärkezellen und der Schalenzellen vor der Druckbehandlung. Dies geht aus den geradlinigen Bruchkanten der Zellwandfragmente hervor. Die Kartoffelpülpe weist nach der Differenzdruckbehandlung denselben Zellulose- und Pektingehalt wie vorher, d. h. wie oben angegeben, auf. Das Pektin ist in der elektronenmikroskopischen Abbildung nicht zu erkennen.

### Beispiel 2:

Die behandelte Kartoffelpülpe gemäß Beispiel 1 wurde sprühgetrocknet. Dabei wurden verschiedene Restfeuchten der getrockneten Kartoffelpülpe eingestellt. Bis zu einer Restfeuchte von 25 Gewichtsprozent war die getrocknete Kartoffelpülpe als Pulver schüttfähig. Die getrocknete Kartoffelpülpe zeigte bei einer Restfeuchte von über 1 Gewichtsprozent und normaler Luftfeuchtigkeit keine hygroskopischen Eigenschaften. Sie war ohne Zusatz von Konservierungsstoffen über viele Monate lagerbar. Dies ist darauf zurückzuführen, daß der Keimgehalt der bei der Stärkeproduktion anfallenden Kartoffelpülpe durch das Autoklavieren und die Differenzdruckbehandlung hinsichtlich Keimzellen auf null herabgesetzt wird. Einzig Sporen werden bei der erfindungsgemäßen Behandlung der Kartoffelpülpe nicht zerstört.

### Beispiel 3:

Die getrocknete Kartoffelpülpe gemäß Beispiel 2 wurde soweit mit Wasser versetzt, bis sich eine pastöse Masse ergab. Diese pastöse Masse wurde zum flächigen Verkleben von zellulosefaserhaltigen Materialien, wie Papier, Pappe und Holz, verwendet. Hierzu wurde die pastöse Masse auf eine der beiden zu verklebenden Oberflächen aufgestrichen, und anschließend wurde die zweite Oberfläche aufgedrückt. Ein Anpreßdruck wurde solange aufrechterhalten, bis der Klebstoff getrocknet war. Anschließend wurde die Belastbarkeit der erzielten Bindung quer zu den Oberflächen ermittelt. Sie betrug in jedem Fall mehr als 10 Newton/ cm². In einigen Fällen konnten Bindungen erreicht werden, die bis zu 40 Newton/ cm² stabil waren.

### Beispiel 4:

Die pastöse Masse gemäß Figur 3 wurde als dünne Schicht auf ein Substrat aufgetragen und getrocknet. Bei Auftropfen von Wasser erfolgte eine sofortige Benetzung der dünnen Schicht und eine Auflösung der dünnen Schicht in dem Wasser. Wurde die dünne Schicht jedoch für vier Stunden bei 150 °C ausgelagert, führte ein anschließendes Auftropfen von Wasser weder zu einer Benetzung noch zu einer Auflösung der dünnen Schicht in dem Wasser. Dies ist wohl darauf zurückzuführen, daß die Stärke, die Zellulose und das Pektin in dem neuen Klebstoff unter Wärmeeinwirkung eine wasserfeste Verbindung eingehen.

### Beispiel 5:

Das Pulver gemäß Beispiel 2 wurde in einem Mischer für die Herstellung von mitteldichten Faserplatten mit zellulosefaserhaltigem Ausgangsmaterial vermischt. Dabei wurde eine Gesamtfeuchte von etwa 25 % eingestellt. Der Anteil des Pulvers an den Feststoffen betrug 3 bis 10 Gewichtsprozent. Das Pulver verteilte sich über sämtliche Fasern des zellulosefaserhaltigen Materials. Aus der Mischung des zellulosefaserhaltigen Ausgangsmaterials mit dem Pulver wurden Platten geformt und bei 170 °C binnen 30 bis 120 Sekunden zu mitteldichten Faserplatten verpreßt. Hierbei ergaben sich mechanisch stabile Faserplatten mit guter Feuchtebeständigkeit. Die mechanische Stabilität der Faserplatten mit einem Kartoffelpülpeanteil von 5 Gewichtsprozent an den Feststoffen entsprach derjenigen einer herkömmlichen Faserplatte mit 10 % Bindemittelanteil eines Harnstoff-Formaldehydharzes. Auch unter 5 Gewichtsprozent Feststoffanteil wurden brauchbare Faserplatten mit dem neuen Klebstoff als Bindemittel erzielt. Bei 10 Gewichtsprozent Feststoffanteil ergaben sich extrem stabile Faserplatten.

### Beispiel 6:

Das Pulver gemäß Beispiel 2 wurde mit Wasser verdünnt, bis Feststoffanteile von 1 bis 30 Gewichtsprozent eingestellt war. Diese Suspension wurde je nach Flüssigkeit auf bereits vorgeformte MDF-Platten vor dem Heißverpressen aufgesprüht oder mit einem Spachtel aufgetragen. Nach dem anschließenden Heißverpressen ergaben sich glatte und dichte Oberflächen bei den fertigen Faserplatten, die ohne weitere Behandlung mit einem Füllstoff lackierbar waren.

### Beispiel 7:

Das Vorgehen entsprach demjenigen beim Beispiel 5, außer daß die Platten nicht heiß, sondern kalt verpreßt wurden. Auch hierbei wurden gute Bindungen erreicht. Allerdings war das Aufbringen von Preßdrücken erforderlich, die mit über 100 kg/cm² deutlich über den üblicherweise zur Herstellung mitteldichter Faserplatten beim Heißverpressen angewandten Drücken liegen.

### BEZUGSZEICHENLISTE

- 1: - Vorrichtung
- 2: - Hochdruckbehälter
- 3: - Kartoffelpülpe
- 4: - Austrittsdüse
- 5: - Sprühdüse
- 6: - Sprühtrocknungseinrichtung
- 7: - Gebläse
- 8: - Luftstrom
- 9: - Zellwandfragment

## Patentansprüche

1. Klebstoff mit einem Feststoffanteil von mindestens 50 Gewichtsprozent modifizierter Kartoffelpülpe, wobei der Kartoffelpülpeanteil einen Zellulosegehalt von mehr als 20 Gewichtsprozent und einen Pektingehalt von mehr als 10 Gewichtsprozent aufweist, **dadurch gekennzeichnet**, daß die Zellulose in dem Kartoffelpülpeanteil zu mehr als 90 Gewichtsprozent in Form von einzelnen Zellwandfragmenten zerstörter Stärkezellen und zerstörter Schalenzellen vorliegt.

2. Klebstoff nach Anspruch 1, **dadurch gekennzeichnet**, daß der Kartoffelpülpeanteil einen unmodifizierten Pektingehalt aufweist.

3. Klebstoff nach Anspruch 1 oder 2, **dadurch gekennzeichnet**, daß der Feststoffanteil der modifizierten Kartoffelpülpe kleinergleich als 95 Gewichtsprozent ist.

4. Klebstoff nach Anspruch 3, **dadurch gekennzeichnet**, daß der Feststoffanteil der modifizierten Kartoffelpülpe 100% beträgt.

5. Klebstoff nach einem der Ansprüche 1 bis 4, **dadurch gekennzeichnet**, daß die Zellulose in dem Kartoffelpülpeanteil zu mehr als 98 Prozent in Form von Zellwandfragmenten zerstörter Stärkezellen und zertstörter Schalenzellen vorliegt.

6. Klebstoff nach einem der Ansprüche 1 bis 5, **dadurch gekennzeichnet**, daß die Zellwandfragmente der zerstörten Stärkezellen und der zerstörten Schalenzellen eine zahlgemittelte mittlere Teilchengröße von weniger als 10 µm, vorzugsweise von weniger als 1 µm, aufweisen.

7. Klebstoff nach einem der Ansprüche 1 bis 6, **dadurch gekennzeichnet**, daß der Klebstoff ein feines Pulver mit einer mittleren Teilchengröße kleinergleich 20 µm und mit einer Restfeuchte kleinergleich 25 Gewichtsprozent ist.

8. Verfahren zur Herstellung des Klebstoffs nach einem der Ansprüche 1 bis 7, wobei eine Kartoffelpülpe einem schnellen Druckabfall unterworfen wird, **dadurch gekennzeichnet**, daß der auf die Kartoffelpülpe einwirkende Differenzdruck so groß ist, daß er zu einer Zerstörung der Zellwände der Stärkezellen und Schalenzellen in einzelne Zellwandfragmente führt.

9. Verfahren nach Anspruch 8, **dadurch gekennzeichnet**, daß die Kartoffelpülpe vor der Differenzdruckbehandlung autoklaviert wird.

10. Verfahren nach Anspruch 8 oder 9, **dadurch gekennzeichnet**, daß die Kartoffelpülpe nach der Differenzdruckbehandlung sprühgetrocknet wird.

11. Verfahren nach Anspruch 10 bezogen auf Anspruch 9, **dadurch gekennzeichnet**, daß die heiße Kartoffelpülpe bei der Differenzdruckbehandlung zum Trocknen versprüht wird.

12. Vorrichtung zur Herstellung des Klebstoff nach einem der Ansprüche 1 bis 7, **dadurch gekennzeichnet**, daß ein aufheizbarer Hochdruckbehälter (2) zur Aufnahme der Kartoffelpülpe (3) vorgesehen ist, daß der Hochdruckbehälter (2) eine Austrittsdüse (4) für die unter Überdruck stehende, erhitzte Kartoffelpülpe (3) aufweist, über der der auf die hindurchtretende Kartoffelpülpe einwirkende Überdruck schnell abfällt, und daß die Austrittsdüse (4) Bestandteil einer Sprühdüse (5) einer Sprühtrocknungseinrichtung (6) ist.

13. Verwendung des Klebstoffs nach einem der Ansprüche 1 bis 7 bei der Herstellung von Platten oder Formkörpern aus zellulosefaserhaltigen Ausgangsstoffen, **dadurch gekennzeichnet**, daß der Klebstoff als Bindemittel in Form eines eine Restfeuchte von kleinergleich 25 Gewichtsprozent aufweisenden Pulvers mit den Ausgangsstoffen vermischt wird.

14. Verwendung des Klebstoffs nach einem der Ansprüche 1 bis 7 bei der Herstellung von Platten oder Formkörpern aus zellulosefaserhaltigen Ausgangsstoffen, insbesondere nach Anspruch 13, **dadurch gekennzeichnet**, daß der Klebstoff als Suspension mit einem Feststoffanteil von 1 bis 30 Gewichtsprozent auf die Oberfläche der Platten bzw. Formkörper aufgebracht wird.

15. Verwendung nach Anspruch 14, **dadurch gekennzeichnet**, daß der Feststoffanteil des Klebstoffs an den Platten bzw. Formkörpern weniger als 1 Gewichtsprozent, vorzugsweise weniger als 0,5 Gewichtsprozent, beträgt.

16. Verwendung des Klebstoffs nach einem der Ansprüche 1 bis 7 als Bindemittel für mehrschichtige Laminate aus zellulosefaserhaltigen folienartigen Ausgangsstoffen, insbesondere Papier.

17. Verwendung nach einem der Ansprüche 13 bis 16, **dadurch gekennzeichnet**, daß der Klebstoff mit den Ausgangsmaterialien kalt verpreßt wird.

18. Verwendung nach einem der Ansprüche 13 bis 17, **dadurch gekennzeichnet**, daß zu Beginn des Verpressen eine Feuchtigkeit von 10 bis 25 Gewichtsprozent in dem räumlichen Bereich des Klebstoffs eingestellt wird.
